# EUROPÄISCHE PATENTSCHRIFT

(11) **EP 1 018 114 B1**
(45) Veröffentlichungstag und Bekanntmachung des Hinweises auf die Patenterteilung: **14.11.2001**
(21) Anmeldenummer: 98948794.7
(22) Anmeldetag: 13.08.1998
(51) Int. Cl.: G11B 7/26, G11B 7/24

(54) **VERFAHREN ZUR HERSTELLUNG EINER OPTISCHEN SPEICHERPLATTE UND ZU DEREN HERSTELLUNG GEEIGNETER CD-R-PLATTENROHLING**
METHOD FOR PRODUCING AN OPTICAL STORAGE DISC AND APPROPRIATE CD-R DISC BLANK FOR THE PRODUCTION THEREOF
PROCEDE DE PRODUCTION D'UN DISQUE MEMOIRE OPTIQUE ET EBAUCHE DE DISQUE COMPACT POUR ENREGISTREMENT CONVENANT POUR LA PRODUCTION D'UN TEL DISQUE

(30) Priorität: 24.09.1997 DE 19742150
(43) Veröffentlichungstag der Anmeldung: 12.07.2000
(73) Patentinhaber: SIEMENS AKTIENGESELLSCHAFT, 80333 München (DE)
(72) Erfinder: BECK, Herbert, D-33100 Paderborn (DE); SCHULZ, Gerhard, D-33397 Rietberg (DE)
(86) Internationale Anmeldenummer: DE9802353
(87) Internationale Veröffentlichungsnummer: WO9916062

(56) Entgegenhaltungen:
- EP-A- 0 514 799
- EP-A- 0 628 956
- WO-A-97/04450

## Beschreibung

Die Erfindung betrifft ein Verfahren zum Herstellen einer optisch lesbaren digitalen Speicherplatte aus einem CD-R-Plattenrohling gemäß dem Oberbegriff des Anspruchs 1 und einen CD-R-Plattenrohling, der zu deren Herstellung geeignet ist.

Ein Verfahren zur Herstellung einer solchen Speicherplatte aus einer CD-Speicherplatte, die auf einer Seite eine Metallschicht und darüber eine Schutzlackschicht trägt und einen vom Kreis mindestens teilweise abweichenden Rand hat, ist aus der DE-U-295 12 188 bereits bekannt. Bei einer Platte dieser Art handelt es sich um eine in Preßtechnik mit Informationen versehenen Speicherplatte vom Typ Compact Disk. Hierbei ist die Information in die Oberfläche der Kunststoffscheibe eingepreßt und diese dann mit einer reflektierenden Metallschicht überzogen. Die Lackschicht dient dem Schutz der die Information tragenden sehr dünnen Metallschicht. Die Kunststoffscheibe ist vollflächig mit der Metallschicht und diese wiederum mit der Lackschicht vollflächig innig verbunden, so daß bei einem Formschnitt nur das Problem des Eindringens von Feuchtigkeit in die offene Schnittkante besteht.

Anders verhält es sich bei einer beschreibbaren optischen Speicherplatte, einer sogenannten CD-R (Recordable Compact Disk) oder auch CD-WO (Compact Disk-Write Once). Diese ist bekanntlich so aufgebaut, daß auf eine Kunststoffscheibe eine transparente Farbschicht aufgebracht ist, die ihrerseits von einer ReElexionschicht üterdeckt ist. Beim. Schreiben von Informationen wird die Farbschicht punktuell erhitzt und verfärbt sich dabei unter gleichzeitiger Bildung einer kleinen Blase. Über dieser hebt sich die Reflexionsschicht leicht an. Aus diesem Grund ist die Reflexionsschicht entlang einer die Rotationsachse umgebenden ersten Linie und entlang einer diese umgebenden weiteren Linie mit der Kunststoffscheibe verbunden. Zwischen diesen Linien liegt die Reflexionsschicht lose auf der die Information tragenden Farbschicht auf. Ein einfacher Formschnitt wie bei einer CD würde also zur vollständigen Zerstörung der Reflexionsschicht führen, auch über dem Informationen tragenden Flächenbereich, so daß die Platte nicht mehr lesbar wäre.

In der EP-A-0 628 956 ist ein CD-R-Plattenrohling und ein Verfahren zu dessen Herstellung beschrieben. Der Plattenrohling besteht aus einer Kunststoffscheibe, welche auf der einer Abtastseite gegenüberliegenden Seite mit einer lose auf der Kunststoffscheibe aufliegenden Reflexionsschicht versehenen ist, und die Reflexionsschicht ist entlang einer eine Rotationsachse der Speicherplatte konzentrisch umgebenden ersten Linie und entlang einer von der Rotationsachse gesehen außerhalb der ersten Linie verlaufenden konzentrischen zweiten Linie mit der Kunststoffscheibe verbunden. Die Kunststoffscheibe ist nur teilweise mit der Reflexionsschicht beschichtet.

Aufgabe der Erfindung ist es, ein Verfahren zum Herstellen einer optisch lesbaren digitalen Speicherplatte vom CD-R-Typ anzugeben und eine solche Speicherplatte, die aus einem CD-R-Plattenrohling hergestellt ist.

Die ein Verfahren betreffende Aufgabe wird durch die im kennzeichnenden Teil des Anspruchs 1 angegebenen Verfahrensschritte und die die Speicherplatte betreffende.Aufgabe durch das Kennzeichen des Anspruchs 13 gelöst.

Erfindungsgemäß wird die Reflexionsschicht entlang einer beliebig geformten, von der Roationsachse gesehen außerhalb der ersten Linie verlaufenden in sich geschlossenen zweiten Linie mit der Kunststoffscheibe verbunden, insbesondere verschweißt und die Platte danach entlang einer der Randkontur entsprechenden dritten Linie geschnitten, wobei die dritte Linie auf der der Rotationachse abgewandten Seite der zweiten Linie verläuft.

Die Reflexionsschicht ist also an ihren Rändern mit der Kunststoffplatte verbunden, der zwischen der ersten und der zweiten Linie befindliche Flächenbereich liegt weiterhin lose auf der Kunststoffplatte auf. Die Speicherplatte kann in diesem Bereich also problemlos beschrieben werden. Außerhalb der zweiten Linie befindliche Flächenbereiche der Reflexionsschicht werden beim Schneiden der Kontur abgetrennt und können leicht von der Kunststoffscheibe abgebürstet, abgewischt oder fortgeblasen werden.

Dadurch, daß die zweite Linie unmittelbar an die dritte Linie angrenzen kann, vermag die Reflexionsschicht auch eine unregelmäßig geformte Speicherplatte vollständig zu überdecken. Diese hat also ein ansprechendes Aussehen auch ohne ein zusätzlich aufgeklebtes, im allgemeinen als Label bezeichnetes, Etikett.

Entsprechend einem die Erfindung fortbildenden Verfahrensmerkmal kann die auf der Platte abzuspeichernde Information vor oder nach dem Schneiden geschrieben werden, wobei zwischen den einzelnen Verfahrensschritten eine beliebig lange Zeit vergehen darf. Unbeschriebene Speicherplatten können also vorgefertigt und zu einem beliebigen Zeitpunkt mit einer individuellen Information beschrieben werden. Beispielsweise können "Glückwunschplatten" in unterschiedlicher, dem jeweiligen Anlaß entsprechender Form hergestellt und zum Kauf angeboten werden, die von einem Käufer in einem eigenen Schreibgerät, einem sogenannten CD-Schreiber, mit persönlichen Informationen wie Liedern, Texten, Bildern oder Videoclips oder auch mit computerverarbeitbaren Daten beschrieben werden können.

Entsprechend einer anderen Fortbildung der Erfindung erfolgt das Verbinden der Reflexionsschicht mit der Kunststoffscheibe zugleich mit dem Schneiden der Randkontur. Dadurch wird ein Arbeitsgang bei der Herstellung gespart. Die auf der Platte abzuspeichernde Information kann wiederum zu einer beliebigen Zeit danäch geschrieben werden.

Das Verbinden erfolgt bevorzugt durch punktuelles überlappendes Laserschweißen, es kann aber auch mit Hilfe eines entsprechend der zweiten Linie geformten Heißprägestempels, durch Kleben oder durch Pressen erfolgen.

Die Kontur wird vorzugsweise durch. Fräsen hergestellt, kann aber auch durch Laserschneiden, Heißdrahtschneiden oder Sägen hergestellt werden.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigt
- Fig. 1: einen CD-R-Rohling, auf dem die oben beschriebenen Linien angedeutet sind,
- Fig. 2: einen vergrößerten Ausschnitt A aus Fig. 1.

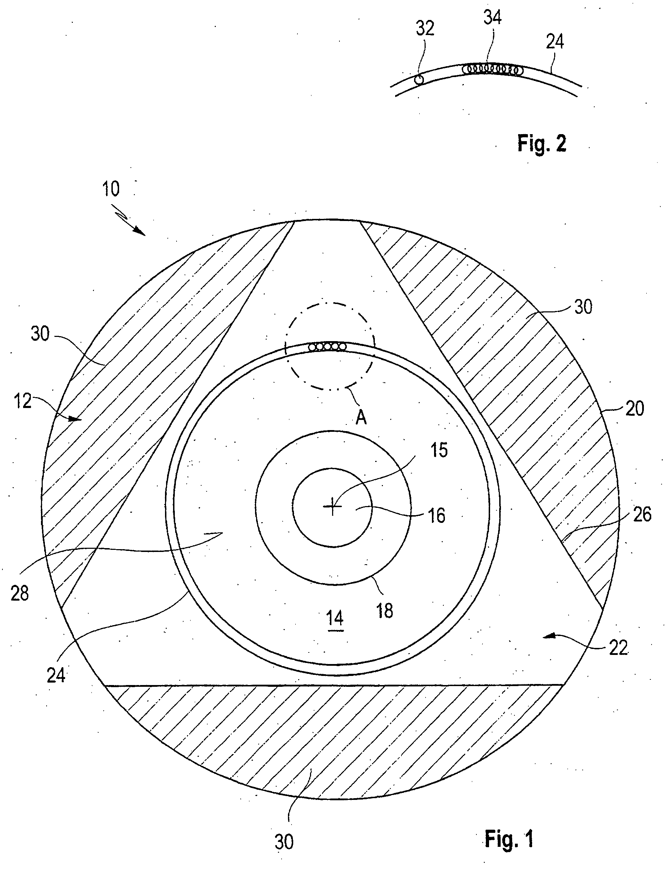

In Fig. 1 ist ein CD-R-Rohling 10 dargestellt, wie er im Handel erhältlich ist. Er besteht aus einer Kunststoffscheibe 12, meist aus Polycarbonat, mit einer darauf aufgebrachten Farbschicht. Über der Farbschicht ist eine Reflexionschicht 14, meist aus Gold, angeordnet. Diese ist entlang einer eine -mit dem Zentrum eines Mittellochs 16 zusammenfallenden- Rotationsachse 15 konzentrisch umgebenden ersten Linie 18 und in der Nähe des Randes 20 des CD-R-Rohlings 10 mit der Kunststoffscheibe 12 verbunden.

Aus dem CD-R-Rohling 10 läßt sich mit dem erfindungsgemäßen Verfahren eine Speicherplatte 22 mit einer beliebigen Randkontur herstellen. In dem in Fig. 1 dargestellten Ausführungsbeispiel erhält die Speicherplatte 22 die Form eines Dreiecks mit abgeplatteten Spitzen. Diese Form wurde für das Ausführungsbeispiel gewählt, um zu verdeutlichen, daß zumindest an einigen Stellen der ursprüngliche Rand 20 des CD-R-Rohlings 10 erhalten bleiben sollte, damit die Speicherplatte 22 leichter in einen CD-Schreiber und später in ein CD-Laufwerk zentriert eingelegt werden kann.

Zunächst wird die Reflexionsschicht 14 entlang einer zweiten Linie 24 mit der Kunststoffscheibe 12 verschweißt. Diese Linie kann einen beliebigen in sich geschlossenen Verlauf haben. Sie muß lediglich innerhalb einer der späteren Randkontur der Speicherplatte 22 entsprechenden dritten Linie 26 bleiben und eine zwischen der ersten Linie 18 und der zweiten Linie 24 verbleibende konzentrische, und damit beschreibbare Fläche 28 muß die aufzuschreibende Informationsmenge fassen können. Im Ausführungsbeispiel umgibt die zweite Linie 24 das Mittelloch 16 konzentrisch. Sie kann aber auch unmittelbar auf der Innenseite der dritten Linie 26 oder beliebig zwischen dieser und der äußeren Begrenzung der beschreibbaren Fläche 28 verlaufen.

Entweder kann die Speicherplatte 22 nun mit Information beschrieben werden, oder es wird zuvor ihre Außenkontur ausgeschnitten. Das Schnittwerkzeug, z.B. eine Fräse, wird dabei entlang der dritten .Linie 26 geführt. Über diese hinausragende schraffiert dargestellte Flächenbereiche 30 fallen dabei ab. Die über die zweite Linie 24 hinausragenden Teile der relativ spröden Reflexionsschicht 14 brechen dabei entlang der zweiten Linie 24 ab.

Wie Fig. 2 in einem vergrößerten Ausschnitt A aus Fig. 1 zeigt, wird die Ref lexionsschicht 24 mit der Kunststoffscheibe 12 vorzugsweise durch Laserschweißen verbunden. Dieses Verfahren hat den Vorteil, daß die Erhitzung punktuell und nur auf einer sehr kleinen Fläche 32 erfolgt. Der durch das Schweißen für ein späteres Aufschreiben "verdorbene" Randbereich bleibt also klein. Die Schweißpunkt-Flächen 32 der einzelnen Laserentladungen überlap.pen einander, so daß eine ununterbrochene Schweißspur 34 entsteht.

## Patentansprüche

1. Verfahren zum Herstellen einer optisch lesbaren digitalen Speicherplatte (22) mit beliebiger Randkontur aus einem CD-R-Plattenrohling (10), der aus einer Kunststoffscheibe (12) besteht, welche auf der einer Abtastseite gegenüberliegenden Seite mit einer lose auf der Kunststoffscheibe (12) aufliegenden Reflexionsschicht (14) versehenen ist, und die Reflexionsschicht (14) entlang einer eine Rotationsachse (15) der Speicherplatte (22) umgebenden ersten Linie (18) mit der Kunststoffscheibe (12) verbunden ist,
**dadurch gekennzeichnet,**
**daß** die Reflexionsschicht (14) entlang einer beliebig geformten, von der Rotationsachse (15) gesehen außerhalb der ersten Linie (18) verlaufenden in sich geschlossenen zweiten Linie (24) mit der Kunststoffscheibe (12) verbunden, insbesondere verschweißt wird und daß aus dem CD-R-Plattenrohling (10) danach entlang einer der Randkontur entsprechenden dritten Linie (26) die Speicherplatte (22). ausgeschnitten wird,
wobei die dritte Linie (26) auf der der Rotationsachse (15) abgewandten Seite der zweiten Linie (24) verläuft.

2. Verfahren nach Anspruch 1, bei dem die auf der Speicherplatte (22) abzuspeichernde Information vor oder nach dem Schneiden geschrieben wird, wobei zwischen den einzelnen Verfahrensschritten eine beliebig lange Zeit vergehen kann.

3. Verfahren nach Anspruch 1, bei dem das Verbindender Reflexionsschicht (14) mit der Kunststoffscheibe (12) zugleich mit dem Schneiden der Randkontur erfolgt und die auf der Speicherplatte (22) abzuspeichernde In-formation zu einer beliebigen Zeit danach geschrieben wird.

4. Verfähren nach einem der Ansprüche 1 bis 3, bei dem das Verbinden durch punktuelles überlappendes Laserschweißen erfolgt.

5. Verfahren nach einem der Ansprüche 1 bis. 3, bei dem das Verbinden mit Hilfe eines entsprechend der zweiten Linie (24) geformten Heißprägestempels erfolgt.

6. Verfahren nach einem der Ansprüche 1 bis 3, bei dem das Verbinden durch Kleben erfolgt.

7. Verfahren nach einem der Ansprüche 1 bis 3, bei dem das Verbinden durch linienhaftes Aufpressen der Reflexionsschicht (14) auf die Kunststoffscheibe (12) erfolgt.

8. Verfahren nach einem der Ansprüche 1 bis 7, bei dem die Kontur durch Fräsen hergestellt wird.

9. Verfahren nach einem der Ansprüche 1 bis 7, bei dem die Kontur durch Laserschneiden hergestellt wird.

10. Verfahren nach einem der Ansprüche 1 bis 7, bei dem die Kontur durch Heißdrahtschneiden hergestellt wird.

11. Verfahren nach einem der Ansprüche 1 bis 7, bei dem die Kontur durch Sägen hergestellt wird.

12. Verfahren nach einem der Ansprüche 1 bis 11, bei dem der CD-R-Plattenrohling (10) eine handelsübliche beschreibbare CD-R-Speicherplatte ist.

13. CD-R-Plattenrohling (10), bestehend aus einer Kunststoffscheibe (12), die auf der einer Abtastseite gegenüberliegenden Seite mit einer lose auf. der Kunststoffscheibe (12) aufliegenden Reflexionsschicht (14) versehenen ist und die Reflexionsschicht (14) entlang einer eine Rotationsachse (15) umgebenden ersten Linie (18) mit der Kunststoffscheibe (12) verbunden ist, **dadurch gekennzeichnet, daß** die Reflexionsschicht (14) entlang einer von der Rotationsachse (15) gesehen außerhalb der ersten Linie (18) verlaufenden in sich geschlossenen zweiten Linie (24) mit der Kunststoffscheibe (12) verbunden ist und der CD-R-Plattenrohling (10) eine einer beliebig geformten von einer konzentrisch zur Rotationsachse (15)angeordneten Kreisform abweichende dritten Linie (26) entsprechende Randkontur hat, wobei die dritte Linie (26) auf der der Rotationsachse (15) abgewandten Seite der zweiten Linie (24) verläuft.

14. CD-R-Plattenrohling (10) nach Anspruch 13, **dadurch gekennzeichnet, daß** die zweite Linie (24) die Rotationsachse (15) konzentrisch umgibt oder auch eine beliebige von der konzentrischen Kreisform abweichende Form hat.

15. CD-R-Plattenrohling (10) nach Anspruch 13 oder 14, **dadurch gekennzeichnet, daß** die Kunststoffscheibe (12) nur teilweise mit der Reflexionsschicht (14) beschichtet ist.

## Claims

1. Method for producing an optically readable digital storage disc (22) with any desired edge contour from a CD-R disc blank (10), which comprises a plastic disc (12) which is provided on the side opposite a scanning side with a reflective layer (14) resting loosely on the plastic disc (12), and the reflective layer (14) is connected to the plastic disc (12) along a first line (18), surrounding an axis of rotation (15) of the storage disc, **characterized in that** the reflective layer (14) is connected, in particular welded, to the plastic disc (12) along a continuous second line (24) which is of any desired form and, seen from the axis of rotation (15), runs outside the first line (18), and **in that** the storage disc (22) is then cut out from the CD-R disc blank (10) along a third line (26) corresponding to the edge contour, the third line (26) running on the side of the second line (24) facing away from the axis of rotation (15).

2. Method according to Claim 1, in which the information to be stored on the storage disc (22) is written before or after the cutting, it being permissible for a time of any desired length to pass between individual method steps.

3. Method according to Claim 1, in which the connecting of the reflective layer (14) to the plastic disc (12) takes place at the same time as the cutting of the edge contour and the information to be stored on the storage disc (22) is written at any desired time thereafter.

4. Method according to one of Claims 1 to 3, in which the connecting is performed by overlapping spot laser welding.

5. Method according to one of Claims 1 to 3, in which the connecting is performed with the aid of a hot embossing punch of a form corresponding to the second line (24).

6. Method according to one of Claims 1 to 3, in which the connecting is performed by adhesive bonding.

7. Method according to one of the Claims 1 to 3, in which the connecting is performed by linear pressing of the reflective layer (14) onto the plastic disc (12).

8. Method according to one of Claims 1 to 7, in which the contour is produced by milling.

9. Method according to one of Claims 1 to 7, in which the contour is produced by laser cutting.

10. Method according to one of Claims 1 to 7, in which the contour is produced by hot-wire cutting.

11. Method according to one of Claims 1 to 7, in which the contour is produced by sawing.

12. Method according to one of Claims 1 to 11, in which the CD-R disc blank (10) is a commercially available writable CD-R storage disc.

13. CD-R disc blank (10), comprising a plastic disc (12) which is provided on the side opposite a scanning side with a reflective layer (14) resting loosely on the plastic disc (12), and the reflective layer (14) is connected to the plastic disc (12) along a first line (18), surrounding an axis of rotation (15), **characterized in that** the reflective layer (14) is connected to the plastic disc (12) along a continuous second line (24) which, seen from the axis of rotation (15), runs outside the first line (18), and the CD-R disc blank (10) has an edge contour corresponding to a third line (26), which is of any desired form and deviates from a circular shape arranged concentrically in relation to the axis of rotation (15), the third line (26) running on the side of the second line (24) facing away from the axis of rotation (15).

14. CD-R disc blank (10) according to Claim 13, **characterized in that** the second line (24) concentrically surrounds the axis of rotation (15) or else is of any desired form deviating from the concentric circular shape.

15. CD-R disc blank (10) according to Claim 13 or 14, **characterized in that** the plastic disc (12) is coated only partially with the reflective layer (14).

## Revendications

1. Procédé de fabrication d'un disque mémoire (22) numérique pouvant être lu par voie optique ayant n'importe quel contour de bord à partir d'une ébauche (10) de disque CDR qui est constituée d'un disque (12) en matière plastique, lequel est muni sur la face opposée à la face de balayage d'une couche (14) réfléchissante reposant de manière lâche sur le disque (12) en matière plastique et la couche (14) réfléchissante est reliée au disque (12) de matière plastique le long d'une première ligne (18) entourant un axe (15) de révolution du disque mémoire (22),
**caractérisé en ce que** la couche (14) réfléchissante est reliée, en étant notamment soudée, au disque (12) en matière plastique le long d'une deuxième ligne (24) fermée sur elle-même de forme quelconque et s'étendant, considérée à partir de l'axe (15) de révolution, à l'extérieur de la première ligne (18) et **en ce que** l'on découpe dans l'ébauche (10) de disque CDR ensuite, le long d'une troisième ligne (26) correspondant au contour du bord, le disque mémoire (22), la troisième ligne (26) s'étendant du côté de la deuxième ligne (24) qui est éloigné de l'axe (15) de révolution.

2. Procédé suivant la revendication 1, dans lequel la formation à mémoriser sur le disque mémoire (22) est écrite avant ou après la découpe, une durée d'une longueur quelconque pouvant s'écouler entre les stades du procédé.

3. Procédé suivant la revendication 1, dans lequel on effectue la liaison de la couche (14) réfléchissante au disque (12) en matière plastique en même temps que la coupe du contour du bord et on écrit ensuite, à n'importe quel moment, l'information à mémoriser sur le disque mémoire (22).

4. Procédé suivant l'une des revendications 1 à 3, dans lequel on effectue la liaison par soudage laser à recouvrement ponctuel.

5. Procédé suivant l'une des revendications 1 à 3, dans lequel on effectue la liaison à l'aide d'un poinçon d'estampage à chaud conformé suivant la deuxième ligne (24).

6. Procédé suivant l'une des revendications 1 à 3, dans lequel on effectue la liaison par collage.

7. Procédé suivant l'une des revendications 1 à 3, dans lequel on effectue la liaison en pressant linéairement la couche (14) réfléchissante sur le disque (12) en matière plastique.

8. Procédé suivant l'une des revendications 1 à 7, dans lequel on produit le contour par fraisage.

9. Procédé suivant l'une des revendications 1 à 7, dans lequel on produit le contour par découpe au laser.

10. Procédé suivant l'une des revendications 1 à 7, dans lequel on produit le contour par découpe à l'aide d'un fil chaud.

11. Procédé suivant l'une des revendications 1 à 7, dans lequel on produit le contour par sciage.

12. Procédé suivant l'une des revendications 1 à 11, dans lequel l'ébauche (10) de disque CDR est un disque mémoire CDR habituel dans le commerce sur lequel on peut écrire.

13. Ebauche (10) de disque CDR constitué d'un disque (12) en matière plastique, qui est muni sur la face opposée à la face de balayage d'une couche (14) réfléchissante reposant de manière lâche sur le disque (12) en matière plastique et la couche (14) réfléchissante est reliée au disque (12) en matière plastique le long d'une première ligne (18) entourant un axe (15) de révolution, **caractérisée en ce que** la couche (14) réfléchissante est reliée, en étant notamment soudée, au disque (12) en matière plastique le long d'une deuxième ligne (24) fermée sur elle-même de forme quelconque et s'étendant, considérée à partir de l'axe (15) de révolution, à l'extérieur de la première ligne (18) et **en ce que** l'on découpe dans l'ébauche (10) de disque CDR ensuite, le long d'une troisième ligne (26) correspondant au contour du bord, le disque mémoire (22), la troisième ligne (26) s'étendant du côté de la deuxième ligne (24) qui est éloigné de l'axe (15) de révolution.

14. Ebauche (10) de disque CDR suivant la revendication 13, **caractérisée en ce que** la deuxième ligne (24) entoure concentriquement l'axe (15) de révolution ou a également une forme quelconque qui s'écarte d'une manière de la forme circulaire concentrique.

15. Ebauche (10) de disque CDR suivant la revendication 13 ou 14, **caractérisée en ce que** le disque (12) en matière plastique n'est revêtu que partiellement de la couche (14) réfléchissante.
